# EUROPEAN PATENT APPLICATION

(11) **EP 4 586 437 A1**
(43) Date of publication of application: **16.07.2025**
(21) Application number: 24150829.0
(22) Date of filing: 09.01.2024
(51) Int. Cl.: H02J 3/32, H02J 7/34, H02J 7/00

(54) **MODULAR HYBRID ENERGY STORAGE SYSTEM**

(71) Applicant: Electric Vehicle Engineering Sweden AB, 269 71 Förslöv (SE)
(72) Inventor: Söderlind, Johan Martin, 269 73 Förslöv (SE)
(74) Representative: Lind Edlund Kenamets Intellectual Property AB

(57) **Abstract**

The present disclosure relates to a hybrid energy storage system, HESS, (10) and a method for activating the HESS (10). The HESS (10) comprises a first energy storage subsystem (1) comprising a plurality of sodium ion battery modules (11-11 :N) and a second energy storage subsystem (2) comprising a plurality of supercapacitor modules. The HESS (10) further comprises an energy management system, EMS, (3) and a first electrical terminal (6c) configured to connect the HESS (10) to a first external grid wherein the EMS (3) is configured to charge and discharge the first energy storage subsystem (1) and the second energy storage subsystem (2) based on a supply/demand metric associated with the first external grid.

## Description

### FIELD OF THE INVENTION

The present invention relates to a Hybrid Energy Storage System (HESS), and specifically to a HESS utilizing sodium-ion battery modules and supercapacitor modules.

### BACKGROUND OF THE INVENTION

Due to the recent rapid adoption of renewable energy sources such as wind power, solar power and even wave or tidal power, for both large and small scale energy production, the carbon footprint of electricity production decreases in many regions. However, a drawback with many types of renewable energy sources is that the energy supply is intermittent and could vary rapidly depending on the weather, time of day or time of year. For national or regional grids with a large portion of renewable, intermittent, energy sources in the energy mix this means that the supply versus demand of electrical power (as well as the cost per MWh of electricity for consumers) could vary rapidly which in turn could lead to unstable grids or even blackouts caused by deviations in the AC frequency of the grid.

For consumers, the rapidly fluctuating cost per MWh of electricity means that it is difficult to effectively make a cost estimate for electricity-intensive processes. Additionally, sensitive processes relying on external supply from the grid are put at risk due to the increased likelihood of blackouts.

To stabilize the availability of electrical power from intermittent energy sources different types of battery-based Energy Storage Systems (ESSs) have been proposed. For example, some ESSs utilize Lithium ion batteries that can be charged and discharged systematically to stabilize the grid. Other ESSs utilize Lead-Acid batteries instead, which are cheaper per kWh of storage capacity but offer a lower expected lifetime (in numbers of charge cycles) while also being heavier and physically larger compared to the Lithium ion batteries.

On the other hand, a drawback with Lithium ion batteries is that they are more expensive compared to Lead-Acid batteries and, while being perceived as safter than Lead-Acid batteries, they are still difficult to use in some environments since they feature a flammable electrolyte which could overheat and catch fire if a battery cell is short circuited.

In international patent application with publication number WO23068919 an energy and power management system utilizing a combination of supercapacitors and Lithium-ion batteries is proposed. However, since this energy and power management utilizes Lithium-ion batteries it inherits the same safety drawbacks as mentioned above.

In view of the drawbacks of existing ESSs with batteries there is a need for a new and improved ESS that overcomes at least some of these drawbacks.

### SUMMARY OF THE INVENTION

It is a purpose of the present invention to provide a new and improved energy storage system that is versatile, safe and capable of making the same design suitable for usage in a wide variety of scenarios. According to a first aspect of the invention there is provided a hybrid energy storage system, HESS, comprising a first energy storage subsystem comprising a plurality of sodium ion battery modules and a second energy storage subsystem comprising a plurality of supercapacitor modules. The HESS further comprises an energy management system, EMS, and a first electrical terminal configured to connect the HESS to a first external grid, wherein the EMS is configured to charge and/or discharge the first energy storage subsystem and the second energy storage subsystem with electrical energy to/from the first external grid based on a supply/demand metric obtained by the EMS, wherein the supply/demand metric is associated with the first external grid.

The first energy storage subsystem may be referred to as a high energy capacity (or high energy density) subsystem since it comprises (e.g. only comprises) sodium ion battery modules which feature a high energy density (e.g. measured in Wh per unit weight). The second energy storage subsystem may be referred to as a high power capacity (or high power density) subsystem since it comprises (e.g. only comprises) supercapacitor modules having a high power density (e.g. measured in W per unit weight).

The supply/demand metric may be any indicator associated with the first external grid that indicates whether the grid would benefit from being supplied with additional power or benefit from having some power consumed (e.g. due to the grid being overloaded with many power producers). As will be exemplified below the supply/demand metric may be a measurement of an electrical property of the first external grid (e.g. the grid frequency) or it may be some other metric directly or indirectly linked to the demand of electrical energy on the external grid (for example the cost of electricity).

The present invention is at least partially based on the understanding that by combining sodium ion battery modules and supercapacitor modules a hybrid energy storage system, HESS, which enhanced environmental properties, and enhanced safety, is provided.

The first energy storage subsystem offers great energy storage density allowing the HESS to store much energy and supply stored energy to e.g. households or the grid for a long period of time. The second energy storage subsystem, on the other hand, offers great power storage density and allows the HESS to respond quickly and output or receive large amounts of power for short durations. This is e.g. beneficial for grid frequency stabilization which requires large amounts of power to be supplied/drawn from the grid to keep the grid frequency stable. Furthermore, when charging an electric vehicle it is also desirable to deliver high power for short periods of time (e.g. during fast charging) and large amounts of energy (e.g. during overnight charging of multiple vehicles).

Sodium ion batteries utilize sodium ions as the charge carrier instead of elements which are less abundant in earth's crust, such as lithium ions. This means that sodium ion batteries are easier to produce in larger quantities and are more environmentally friendly. Additionally, sodium ion batteries have a wider operating temperature range allowing the HESS to be deployed in a wide variety of environments. Additionally, sodium ion batteries can be short circuited and rendered completely inert, which facilitates transportation of the HESS and enables the HESS to make use of shut-down procedures.

It has been realized that with the HESS of the present invention a versatile energy storage system, which is safe and can be used in a wide variety of situations, is provided.

In some implementations, the cathodes and/or anodes of each sodium ion battery module comprises Prussian blue or sodium vanadium.

Sodium ion battery modules utilizing Prussian blue or sodium vanadium anodes and cathodes feature longer life expectancy in terms of a high expected deep charge cycle life, i.e. the expected number of charge-discharge cycles the module can go through before failing. In some implementations, the sodium ion battery modules have an expected deep charge cycle life greater than 20000 cycles, greater than 30000 cycles or even greater than 50000 cycles.

Typically, the sodium ion battery modules will feature a power density exceeding 300 W/kg, such as about 400 W/kg and an energy density of about 16 Wh/kg.

A long expected lifetime of the sodium ion battery modules makes the HESS suitable for installation in new locations, e.g. by submerging the HESS below ground or underwater.

In some implementations, the supercapacitor modules comprise battery-supercapacitor hybrids.

With battery-supercapacitor hybrids the energy storage capacity of the supercapacitor modules is enhanced whereby a high power level can be outputted for a longer period of time. A difference between a supercapacitor and a supercapacitor-battery hybrid is in part in terms of the self-discharge rate. A supercapacitor has a comparatively high self-discharge rate whereas a supercapacitor-battery hybrid has a comparatively low self-discharge rate. Another difference is found in the equivalent series resistance (ESR) wherein a supercapacitor has a lower ESR compared to a supercapacitor-battery hybrid, this typically means that a supercapacitor has higher power density (e.g. measured in units of Wh/kg) compared to supercapacitor-battery hybrids allowing it to emit/receive more power compared to a battery.

In some implementations, the battery-supercapacitor hybrids comprise anodes and cathodes, wherein the anodes and cathodes (each) comprise graphene with a metal oxide additive.

This type of battery-supercapacitor hybrid has shown to exhibit long cycle life, such as an expected cycle life of 30000 cycles, 40000 cycles or even 50000 cycles. The power density is still very high and may exceed 2 kW/kg or even 3 kW/kg for short durations (such as about 10 seconds). The energy density may be above 5 Wh/kg, such as above 10 Wh/kg but is typically below 15 Wh/kg. Some types of battery-supercapacitor hybrids have an even higher energy density, which could exceed 50 or even 60 Wh/kg. However, such batter-supercapacitor hybrids are often expensive and difficult to realize without rare and highly sought after materials such as lithium. These properties, and especially in combination with the long expected cycle life of the battery modules, makes the HESS of the present invention suitable for long time use before the battery-supercapacitor modules or battery modules fail. In addition, as will be described below, the longevity of the HESS is further improved by its modularity and its capability of e.g. decreasing utilization (making less frequent use) of some battery or battery-supercapacitor modules that are faulty. As will be described below, it is also possible to disconnect failing modules completely.

In some implementations, the first energy storage subsystem and second energy storage subsystem have a maximum total power output exceeding 1,6 MW.

Accordingly, the HESS can operate at high power levels and effectively aid in stabilizing the utility grid and/or provide power to a large number of households. In one exemplary embodiment, the supercapacitor modules have a power density of 4000 W/kg, and the battery modules have a power density of 400 W/kg whereby the HESS will utilize approximately 1420 kg of battery modules and supercapacitor modules with a peak power output of 1.6 MW and an 20-80 weight proportion of supercapacitor modules with respect to battery modules. In another example, a 10-90 weight proportion of supercapacitor modules with respect to battery modules is envisaged. These weight proportions are merely exemplary and may be tailored depending on the context in which the HESS will operate. In some implementations, the weight proportion of supercapacitor modules to battery modules is adjusted within the range of X - (100-X) wherein X is in the range of 5 to 50.

In some implementations, the HESS is provided inside a single housing having the dimensions of an ISO shipping container.

This enables the HESS to be transported and handled in an efficient manner, using existing logistics infrastructure. For example, the entire HESS is provided inside an ISO shipping container.

In some implementations, the HESS further comprises a second electrical terminal configured to connect the HESS to a second electric grid, and a plurality of switches. Wherein the EMS is further configured to control the plurality of switches to connect one or more sodium ion battery modules to either one of the first and second terminal and control the plurality of switches to connect one or more supercapacitor modules to either one of the first and second terminal, so as to adaptively allocate at least a portion of the first energy storage subsystem and at least a portion of the second energy storage subsystem between the first and second terminal.

By providing the HESS with at least two terminals, and a switch arrangement for connecting each battery module and supercapacitor module either one of the two terminals the HESS can be dynamically adapted to meet the varying demands of two different grids. The same HESS can be used in a variety of applications without necessitating replacing any supercapacitor modules or battery modules. Together with the long cycle life expectancy of the battery modules and supercapacitor modules the HESS can operate for a long period of time in a wide range of applications without replacement of any battery or supercapacitor modules. As an example, the plurality of switches can be controlled to allocate all battery modules to the first terminal and all supercapacitor modules to the second terminal, or vice versa. The at least two terminals are preferably isolated from each other meaning that the battery/supercapacitor modules connected to the first terminal operate completely independently of the battery/supercapacitor modules connected to the second terminal.

In some implementations, the HESS further comprises a first DC-AC converter connected between the first and second energy storage subsystem, and the first external terminal, the first DC-AC converter converting DC voltage of the first energy storage subsystem and second energy storage s subsystem to AC at the first terminal, wherein the first terminal is an AC terminal.

Accordingly, the HESS can be connected to an AC grid without the need for an auxiliary DC-AC converter.

In some implementations, the HESS further comprises a second DC-AC converter connected between the first and second energy storage subsystem, and the second external terminal (6d), the second DC-AC converter converting DC of the first energy storage subsystem and second energy storage subsystem to AC at the second terminal, wherein the second terminal is an AC terminal.

That is, the at least two terminals are both AC terminals. Depending on the demands of each AC terminal, the high power capacity supercapacitor modules or the high energy capacity sodium ion batteries can be allocated to each AC terminal to meet the demands of each AC terminal. For example, the AC voltage of the first terminal is between 0.4 kV to 132 kV such as between 1 kV to 132 kV and the AV voltage of the second terminal 400 V. Accordingly, the first AC terminal may be connected to one or more households and the second terminal is connected to the utility grid (e.g. to the distribution portion of the grid at around 50 kV, the high voltage portion of the grid at around 110 kV or the extra high voltage portion of the grid with voltages in excess of 275 kV).

By using separate DC-AC converters for each of the two AC terminals operational efficiency is enhanced since each converter can be tailored for its respective target output voltage.

In some implementations, the HESS further comprises a DC-DC converter converting DC of a first voltage of the first energy storage subsystem and second energy storage subsystem to DC of a second voltage at the second terminal, wherein the second terminal is a DC terminal. For example, the DC-DC converter replaces an AC-DC converter or is present in addition to two AC-DC converters, each converter serving a respective terminal.

That is, the HESS according to some implementations comprises a DC terminal served by a DC-DC converter stepping down or stepping up the DC voltage of the battery modules and supercapacitor modules. The DC terminal may e.g. be used to charge an electrical vehicle or connected directly to a photovoltaic system eliminating the need for an inverter needed for connecting the photovoltaic system to the AC grid.

In some implementations, the HESS further comprises a thermal energy storage subsystem comprising a heat engine and a heater configured to heat an environment of the HESS (10).

With the heat energy storage, excess energy from e.g. peak production hours in the utility grid can be converted to heat whereby the heat can later be transformed back to electrical energy by the heat engine. Preferably, to enable long time heat energy storage the heater is configured to heat the ground (e.g. the HESS is submerged below ground and heats the environment around it) and the heat engine is coupled to the ground to convert the heat back to electrical energy. Preferably, the energy management system is configured to utilize the heat energy storage system as a last resort, only when the maximum power capacity or energy capacity of the other subsystems are reached is the heat energy storage system utilized.

In some implementations, the supply/demand metric is at least one of an electricity cost value, a grid AC frequency, a measured current, a measured power level, and a measured voltage.

The supply/demand metric is associated with at least one of the terminals. That is, the supply/demand metric indicates a supply/demand at the at least one terminal of the HESS. For example, if one terminal is an AC terminal connected to the utility grid the supply/demand metric may indicate the grid AC frequency and the EMS is configured to supply power to the grid if the AC frequency drops below a predetermined lower threshold and to draw power from the grid (to charge the subsystems) if the AC frequency goes above a predetermined higher threshold.

Similarly, an electricity cost value may be provided to the EMS whereby the EMS controls charging/discharging of the subsystems based on the cost, preferring discharging when the electricity cost is high and charging when the electricity cost is high.

It is understood that some supply/demand metrics may be determined (e.g. measured by a sensor provided in the HESS or provided externally). For example, the current flowing to/from, the voltage at or the power flowing to/from one of the terminals can be measured with a sensor provided in the HESS. Alternatively, it is envisaged the sensor is provided externally and communicates with the EMS of the HESS via a network, such as a mobile network. The grid frequency is another example of an entity that can be measured directly by the HESS. Alternatively, the grid frequency can be communicated to the EMS of the HESS via a network, such as a mobile network, e.g. from utility grid operators that continuously monitor the utility grid frequency. For example, the HESS may be configured to initiate charging or discharging when a sufficiently large deviation from the design grid frequency (usually 50 Hz or 60 Hz) is detected to stabilize the grid frequency.

The same applies to the dynamically evolving electricity cost (e.g. expressed in monetary cost per kWh or MWh of electric energy) which can be communicated to the EMS over a network. Based on the electricity cost the EMS of the HESS may determine if charging or discharging should be performed. For example, when the electricity cost is above a predetermined threshold the EMS prioritizes discharging and when the electricity cost is below the predetermined threshold the EMS prioritizes charging.

As yet another example, the HESS may be connected to a household at a first AC terminal and the utility grid at a second AC terminal whereby the EMS allocates one or more modules to the first AC terminal and one or more modules to the second AC terminal. It may be desirable to keep as many modules as possible connected to the second AC terminal to rapidly supply/draw power from the utility grid to stabilize the grid frequency. The EMS may therefore allocate a number of modules to the first AC terminal and monitor the current flowing out of the first terminal to the household (for example, the AC voltage remains the same). The EMS may further be configured to allocate additional modules to the first terminal when the current supplied via the first terminal increases. For instance, the EMS keeps track of a maximum current level that can be supplied with the current modules whereby more or fewer modules are allocated as the current draw fluctuates. More or fewer modules are allocated to have a maximum current level that leaves some margin to the actual current draw.

In some implementations, the supply/demand metric is an indicator indicating the demand of electricity at one or more terminals. For example, if one terminal is connected to an electric vehicle charging station and an electric vehicle connects to the charging station the charging station may convey (e.g. over a network) an indicator to the EMS of the HESS indicating that there is a demand for power at the terminal connected to the electric vehicle charging station. Optionally, the indicator indicates the charging power (e.g. expressed in kW) the electric vehicle can accept wherein the EMS is configured to select and connect battery modules and/or supercapacitor modules to the terminal which can supply the charging power.

Similarly, a demand indicator may be received from a household and/or the utility grid (e.g. the demand indicator is extracted from the energy price) which the EMS uses to determine whether to supply power to/from each terminal.

A demand can be positive or negative. A positive demand indicates there is a need for more electrical power and a negative demand indicates there is a surplus of electrical power that needs to be consumed.

The EMS may comprise an input stage configured to obtain a supply/demand metric and use the demand/supply metric for connecting and disconnecting the modules. The input stage may for example be configured to receive sensor readings from one or more sensors and/or to receive/access data on a server storing e.g. the electricity price and/or grid frequency data.

In some implementations, each sodium ion battery module and supercapacitor module is arranged in a sodium ion battery section, comprising multiple sodium ion battery modules connected in series, and a supercapacitor section, comprising multiple supercapacitor modules connected in series, respectively. Wherein each sodium ion battery module and supercapacitor module are further associated with an individual disconnect switch, and wherein the EMS is further configured to identify a faulty sodium ion battery module or a faulty supercapacitor module and configured to, in response to detecting a faulty sodium ion battery module or a faulty supercapacitor module, disconnect the faulty sodium ion battery module or faulty supercapacitor module.

This further improves the longevity of the HESS, and especially when the modules are allocated in sections. By disconnecting faulty modules a section can still be used. This further improves the safety of the HESS since faulty modules are not strained. Disconnecting the faulty module from a section may comprise bypassing the module such that the remaining modules in the section are still connected in series.

In some implementations, the first energy storage subsystem is associated with a battery management system (BMS) that monitors each battery module and the second energy storage subsystem is associated with a (super)capacitor management system (CMS) that monitors each supercapacitor module. When either the BMS or the CMS identifies that a module is faulty it issues a control signal to corresponding disconnect switch to disconnect the faulty module. For example, each module may issue a status signal indicating a state-of-health of the module wherein the BMS and/or CMS is configured to disconnect a module which does not show a healthy status. As another example, the BMS and/or CMS may be configured to continuously or intermittently measure a voltage, resistance or current over/through each module whereby the BMS and/or CMS may detect an anomaly in the measured voltage, resistance or current which is taken as an indicator that the module is faulty.

In some implementations, the EMS is further configured to implement a shut-down procedure, wherein the shut-down procedure comprises short-circuiting each sodium ion battery module and supercapacitor module to put the HESS in a temporary inert state.

The short-circuiting may require a dedicated short-circuit switch for each battery and super-capacitor module. In some implementations, the short-circuit switch is also operated for a faulty module which has been disconnected or bypassed. This enhances safety since the faulty module is rendered completely inert. Short-circuiting sodium ion battery modules and supercapacitor modules does not pose any risk for thermal runaway or explosion, compared to e.g. lithium ion batteries.

Each short circuit-switch is connected to a short-circuiting control module (which in turn may be a part of the BMS, CMS or EMS). Preferably, the short-circuiting module is configured to be externally powered by e.g. connection to the utility grid. To this end, when the HESS is first installed at a location it may require some power to be delivered to it, and more specifically to the short-circuiting module, which initiates operation by opening each short circuit switch, allowing the modules of the two subsystems to initiate charging.

According to a second aspect of the invention there is provided a method for activating a HESS. The method comprises providing a HESS according to the first aspect, wherein each sodium-ion battery module (and/or supercapacitor module) comprises at least one sodium-ion battery cell (and/or supercapacitor cell) and wherein each sodium-ion battery cell (and/or supercapacitor cell) is associated with a short-circuit switch which is closed, so as to short circuit each sodium-ion battery cell (and/or supercapacitor cell). The method further comprises connecting the first electrical terminal to the first electrical grid, powering a short-circuiting module using the first electrical grid. Wherein the short-circuiting module is configured to actuate (i.e. control the opening and closing of) the short-circuit switches so as to open or close the short-circuit switches. The method further comprises opening each short-circuit switch with the short-circuiting module and after each short-circuit switch has been opened, charging at least one sodium-ion battery module with power from the first electrical grid.

Accordingly, a method for initialization operation of the HESS (e.g. after it has been moved to a new location) is provided. The method involves first releasing the battery from the safe, inert, short-circuited state whereafter the HESS can start charging.

The invention according to the second aspect features the same or equivalent benefits as the invention according to the first aspect. Any functions described in relation to the method may have corresponding features in a HESS, or vice versa.

### DESCRIPTION OF THE DRAWINGS

Figure 1 is a block diagram illustrating a HESS according to some implementations.
Figure 2 is a block diagram illustrating a plurality of battery modules and how the battery modules can be interconnected to form a battery section capable of shedding faulty battery modules at the expense of lower section voltage.
Figure 3 is a block diagram illustrating the switches of the power conversion system that allows the battery sections and supercapacitor sections to be connected or disconnected from respective terminals.
Figure 4a is a block diagram illustrating how the switches of the power conversion system may be set to allocate two battery sections to the AC terminal(s).
Figure 4b is a block diagram illustrating how the switches of the power conversion system may be set to allocate one battery section to each of the AC terminal and DC terminal.
Figure 4c is a block diagram illustrating how the switches of the power conversion system may be set to disconnect a battery section.
Figure 5 is a block diagram illustrating an alternative switch layout of the power conversion system that enables full isolation of a battery section or supercapacitor section.
Figure 6 is a flowchart illustrating a method for starting and using a HESS according to some implementations.

### DETAILED DESCRIPTION

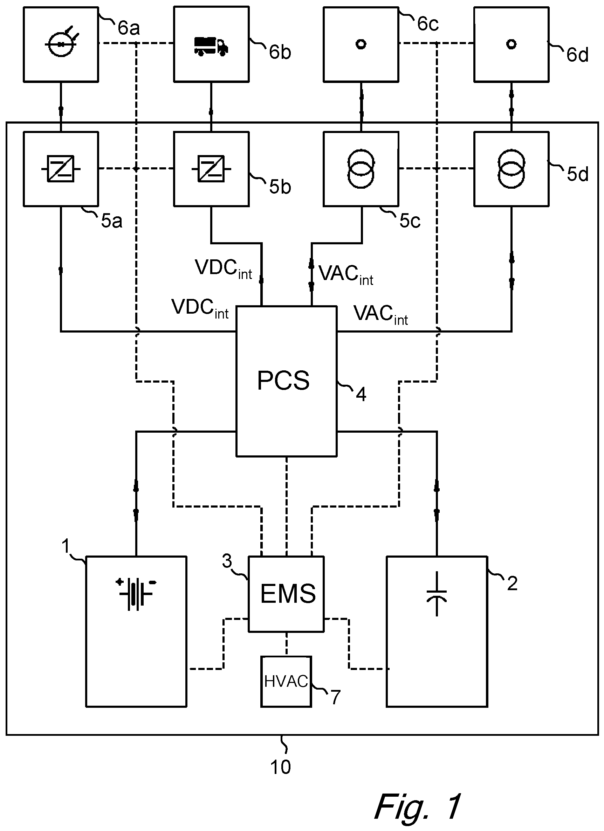

Fig. 1 is a high level schematic illustrating the main components of the hybrid energy storage system, HESS, 10 according to some implementations.

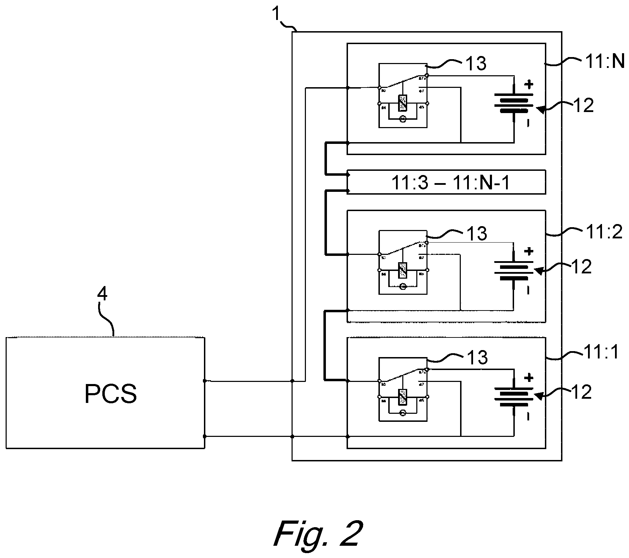

The HESS 10 comprises a high storage capacity (first) subsystem 1 comprising a plurality of sodium ion battery models. With further reference to fig. 2 a detailed view of the high storage capacity subsystem 1 with N of sodium ion battery modules 11:1 - 11:N is shown. Each sodium ion battery module 11:1 - 11:N may in turn comprise a plurality of individual sodium ion battery cells 12 representing the basic building block of sodium ion batteries. Each sodium ion battery cell 12 features the same individual voltage and the multiple sodium ion cells may be connected to form a sodium ion battery module 11:1 - 11:N with a desired voltage.

Preferably, the sodium ion battery cells comprise an anode and cathode comprising Prussian blue or sodium vanadium. Sodium ion battery cells with this type of anodes and cathodes have shown to exhibit long lifetime in terms of being able to go through a large number of recharge cycles.

In one exemplary embodiment, each sodium ion battery module 11:1 - 11:N has a voltage of 48 V, however this is merely exemplary and it is envisaged that each sodium ion battery modules 11:1 - 11:N with a higher or lower voltage can be used.

As mentioned, the high storage capacity subsystem 1 comprises N sodium ion battery modules 11:1 - 11N. It is envisaged that N is least ten, at least sixteen or even at least one hundred providing a high energy storage capacity. Preferably, the sodium ion battery modules 11:1 - 11:N are grouped into battery sections or battery "banks", with each section comprising N_{sec} sodium ion battery modules wherein N_{sec} is at least two.

In one advantageous embodiment, N_{sec} = 16 and each sodium battery module 11:1 - 11:N has an individual voltage of 48 V. Preferably the high storage capacity subsystem 1 comprises at least two such sections for a total of at least 2N_{sec} or 32 sodium ion battery modules 11:1-11:N. Each section comprises a plurality of section SPDT switches 13 for connecting each module in the section in series and, if necessary, bypassing at least one of the modules in the section in case a module becomes faulty. For example, fig. 2 shows one example of a section where each sodium ion battery module 11:1 - 11:N comprises an individual SPDT switch 13 for disconnecting or connecting each module to the series connection forming the section.

If N = 16 and all 48 V modules 11:1 - 11:N of the section are operational, the modules 11:1 - 11:N of a section can be connected in series to form a total section output voltage of about 768 V. If one module 11:1 - 11:N faults it can be bypassed by operating the associated SPDT switch to disconnect it from the section. This means e.g. that the voltage of the sections drops to about 720 V if one module is disconnected or to about 672 V if two modules are disconnected. However, as will be described below, a lower voltage can still be used provided it is within the range of the one or more DC-DC or DC-AC converters connected to battery section via the power conversion system, PCS, 4.

Turning back to fig. 1 it is seen that the HESS 10 further comprises a high power capacity (second) subsystem 2 comprising a plurality of supercapacitor modules or battery-capacitor hybrid modules sharing the same general structure with the high storage capacity subsystem 1. A battery-capacitor hybrid module is sometimes also referred to as a super battery but throughout this disclosure these modules will be referred to as supercapacitor modules and it is understood that this term is to be interpreted broadly, so as to cover both super batteries and capacitor-battery hybrids.

Preferably, the supercapacitor modules are realized with high power density modules with a long cycle life. It is envisaged that the supercapacitor modules use anodes and cathodes of graphene with added metal oxide and liquid electrolyte which has been shown to enable high power density and cycle life. Preferably, the supercapacitor modules are of a wound design with curved graphene anodes and cathodes which is both space efficient and reliable.

Accordingly, each supercapacitor module can be realized without valuable metals such as cobalt and copper, and without graphite. To this end the supercapacitor module can be comparatively environmentally friendly. This type of supercapacitor module, with graphene anodes and cathodes, also exhibits a reduced risk of explosion if the module is damaged or opened.

In manner similar to the sodium ion battery modules, the supercapacitor modules may also be divided into sections or "banks" with a plurality of individual supercapacitor modules forming a section. In some implementations, each super capacitor module has a nominal output voltage of about 2 V, such as 2.25V whereby about 340 supercapacitor modules may be combined into a section which, when connected in series generates an output voltage of about 768 V.

In manner similar to the sodium ion battery modules, each supercapacitor module may comprise an individual SPDT switch for disconnecting the supercapacitor module if it becomes defective. Optionally, since each individual supercapacitor module is associated with a comparatively small voltage, multiple supercapacitors may be combined together to form a super capacitor cluster, wherein each supercapacitor cluster is associated with an SPDT switch and multiple supercapacitor clusters are combined to form a section.

Accordingly, the HESS 10 comprises high power capacity subsystem 2 with supercapacitor modules capable of delivering high power output which can be charged rapidly and a high energy capacity storage subsystem 1 capable of storing large amounts of energy and delivering energy for long periods of time. With these two types of energy storage subsystems 1, 2 the HESS 10 becomes versatile and capable of both responding quickly (to e.g. perform utility grid frequency balancing) and providing power for a long time (for example delivering power to households during a power outage).

To further enhance the versatility and capabilities of the HESS, the HESS comprises a power conversion system 4, PCS 4, comprising a plurality of switches configured to connect and disconnect individual battery sections and supercapacitor sections to/from two or more terminals 6a-d. In some implementations, the at least two terminals 6a-d comprises an AC terminal and a DC terminal. For example, the AC terminal is a household AC terminal 6c and/or a utility grid AC terminal 6d. The DC terminal is for example an electric vehicle charging (EVC) terminal 6b or a photovoltaic terminal 6a.

In general, any AC terminal may be single phase AC terminal or an AC terminal with multiple phases (such as two or three phases). For instance, households commonly use three-phase AC.

The household AC terminal 6c is in some implementations associated with a first AC transformer 5c configured to transform an intermediate AC voltage VACᵢₙₜ output by the PCS 4 to a 400 V AC voltage used to supply individual households with power. The intermediate AC voltage is preferably in the range 340 V to 420 V, such as 380 V.

The utility grid AC terminal 6d is associated with a second transformer 5d configured to transform the intermediate AC voltage VACᵢₙₜ output by the PCS 4 to AC voltage suitable for the utility grid, such as at least 0.4 kV AC, at least 1 kV AC, at least 132 kV AC or at least 200 kV AC.

The EVC terminal 6b is in some implementations associated with a DC-DC converter configured to transform an intermediate DC voltage VDCᵢₙₜ output by the PCS 4 to a DC voltage for EVC. The intermediate DC voltage VDCᵢₙₜ is preferably in the range of 1800 V to 2200 V, such as 2000 V.

The photovoltaic terminal 6a is in some implementations associated with a DC-DC converter configured to transform an output DC-voltage from a photovoltaic system to the intermediate DC voltage VDCᵢₙ of the PCS 4, enabling charging of the subsystems 1, 2 with renewable power from photovoltaic systems via the PCS 4.

Other types of renewable energy sources can be connected to either one of the AC terminals for charging the subsystems 1, 2 via the PCS 4.

In the above, different inverters are described and it is understood that these are in general bi-directional inverters capable of supplying power to/from the PCS 4 and to/from the subsystems 1, 2 via the PCS 4. For the photovoltaic terminal a unidirectional DC-DC converter is sufficient since it is not necessary to provide power to the photovoltaic system which in itself acts as a power source. The DC-DC converter 5b for the EVC terminal may be bidirectional. For example, it is envisaged that an electric vehicle may temporally support the HESS 10 by discharging to charge the HESS 10 subsystems 1, 2. Optionally, the EVC DC-DC converter 5b is a unidirectional converter whereby power only from the HESS to the electric vehicle and not vice versa. Allowing the HESS 10 to act as a vehicle charging station.

Preferably, the HESS 10 comprises at least two terminals. In some implementations, the at least two terminals are the household AC terminal 6c and the AC grid terminal 6d whereby the HESS 10 can act as a buffer between one or more households connected to the household AC terminal 6c and the AC grid connected to the AC grid terminal 6d. As will be described below, how much (i.e. how many sections) of the subsystems that is allocated to each of the terminals 6c, 6d will be controlled by energy management system, EMS, 3.

The EMS 3 is configured to control how many battery modules (or sections thereof) and supercapacitor modules (or sections thereof) are allocated to each terminal 6a, 6b, 6c, 6d, whether to discharge or charge battery modules and/or supercapacitor modules. The EMS 3 may further comprise a short-circuiting module (preferably configured to be powered separately) configured to control short-circuit switches to short each battery cell and supercapacitor cell during a shut-down procedure. The EMS 3 is further configured to control the switches of individual battery and supercapacitor modules to disconnect the modules completely if a fault is detected.

In some implementations, the HESS 10 further comprises an HVAC system 7 configured to heat and/or cool subsystems 1, 2. Optionally, the HVAC system 7 is configured to heat and/or cool the two subsystems 1, 2 independently since the battery modules and supercapacitor modules may be associated with different temperatures for maximum efficiency.

It is realized however, that since the specific combination of sodium ion batteries and supercapacitors is used, which both feature a wide operational temperature range, the HVAC system 7 can be made small and compact with lower maximum cooling/heating power compared to an energy storage system utilizing lithium ion batteries that have a narrower operational temperature range. For example, the sodium ion battery modules and supercapacitor modules envisaged can be safely and efficiently used in temperatures ranging from -40°C to + 80°C.

In fact, in some implementations, the HVAC system 7 can be omitted entirely since the HESS 10 is placed in an environment which is expected to remain within the operational temperature range of the subsystems 1, 2. For example, in some implementations the HESS 10 system is submerged below ground at a depth of 1 to 10 meters. At these depths, the soil temperature is approximately constant throughout the year and equal to the average surface temperature. Accordingly, the HESS 10 may not need an HVAC system 7 if it submerged below ground at a location having an average temperature within the temperature range of the subsystems 1, 2. As another alternative, the HESS 10 is provided inside a watertight housing and submerged in water, e.g. in the sea, in a lake, or in a river.

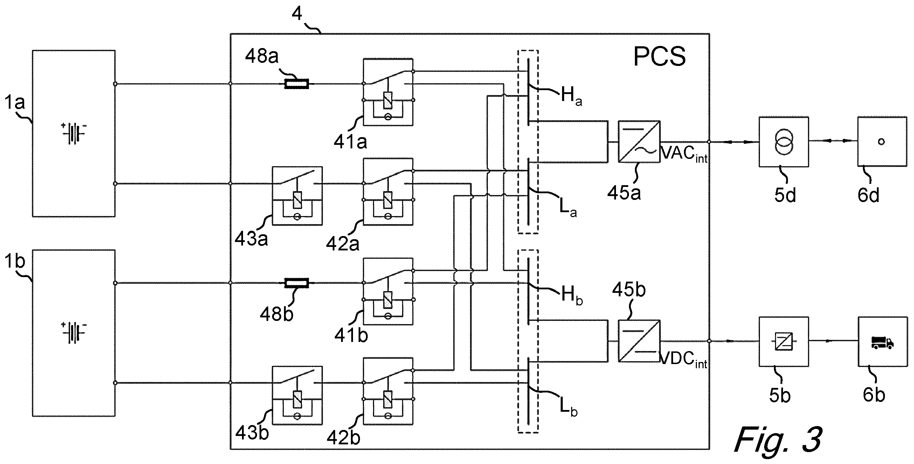

Turning to fig. 3 the PCS 10 according to some implementations is shown for two battery sections 1a, 1b. The first battery section 1a has two ports, a positive port and a negative port, and the ports of the first battery section are connectable to a main DC-AC converter 45a or main DC-DC converter 45b via a plurality of SPDT switches 41a, 42a, 43a. More specifically, the positive port of first battery section 1a is connected to a first SPDT switch 41a configured to connect the positive port of the first battery section 1a to either the positive port Hₐ of the main DC-AC converter 45a or the positive port H_{b} of the main DC-DC converter 45b. The negative port of the first battery section 1a is connected to a second SPDT switch 42a configured to connect the negative port of the first battery section 1a to either the negative port Lₐ of the main DC-AC converter 45a or the negative port L_{b} of the main DC-DC converter 45b. Accordingly, by operating the switches it is possible to connect the battery section 1a to either the main AC-DC converter 45a or the main DC-DC converter 45b. It is also envisaged that the two SPDT switches 41a, 42a can be replaced with a single DPDT switch (not shown).

The main DC-AC converter 45a converts the DC voltage of one or more connected battery sections and/or supercapacitor sections to the intermediate AC voltage VACᵢₙₜ which in turn can be transformed to the AC voltage needed at the one or more AC terminals 6d of the HESS using AC transformer 5d. Similarly, the main DC-DC converter 45b converts the DC voltage of one or more connected battery sections and/or supercapacitor sections to the intermediate DC voltage VDCᵢₙₜ which in turn can be converted to the DC voltage needed at the one or more DC terminals 6b of the HESS using DC converter 5b.

Accordingly, the EMS may be configured to control at least two SPDT switches 41a, 42a for each battery section 1a to set these SPTD switches in one of two states, either connecting the battery section 1a to the main AC-DC converter 45a or connecting the battery section to the main DC-DC converter 45b.

The second battery section 1b is connected to the main DC-AC converter 45a and main DC-DC converter 45b in the same fashion using switches 41b and 42b and it is understood that the same connection using two SPDT switches is repeated for every battery section 1a, 1b and supercapacitor section (not shown) through the HESS.

For added safety there is a fuse 48a, 48b added for each positive terminal. The fuse 48a, 48b will break or disconnect in response to a current surge, to protect the battery section 1a, 1b and/or the other electronics of the HESS.

Additionally, each negative terminal of each battery section is further connected to a SPST switch 43a, 43b configured to disconnect a battery section completely if necessary. Accordingly, the EMS can control the SPST switch 43a, 43b to disconnect a battery section 1a, 1b or supercapacitor section if needed.

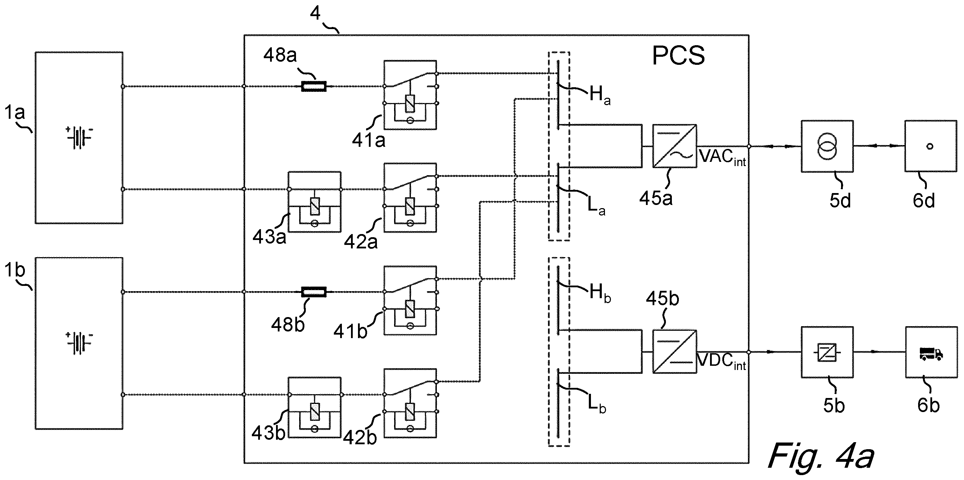

Turning to fig. 4a it is shown schematically how two battery sections 1a, 1b can be connected to the main DC-AC converter 45a. In this case the EMS may have determined that there is little or no load on the DC terminal(s) 6b connected via main DC-DC converter 45b and decided to allocate both battery sections to the main DC-AC converter 45a and the AC port(s) 6d. Of course, the opposite is also possible and by manipulating the SPDT switches 41a, 42a, 41b, 42b the EMS can instead connect both battery sections to the main DC-DC converter 45b if desired. For instance, if a vehicle connects to the EVC terminal 6b one or more battery sections may be needed (as well as one or more supercapacitor sections) and may then be connected to the main DC-DC converter 45b instead.

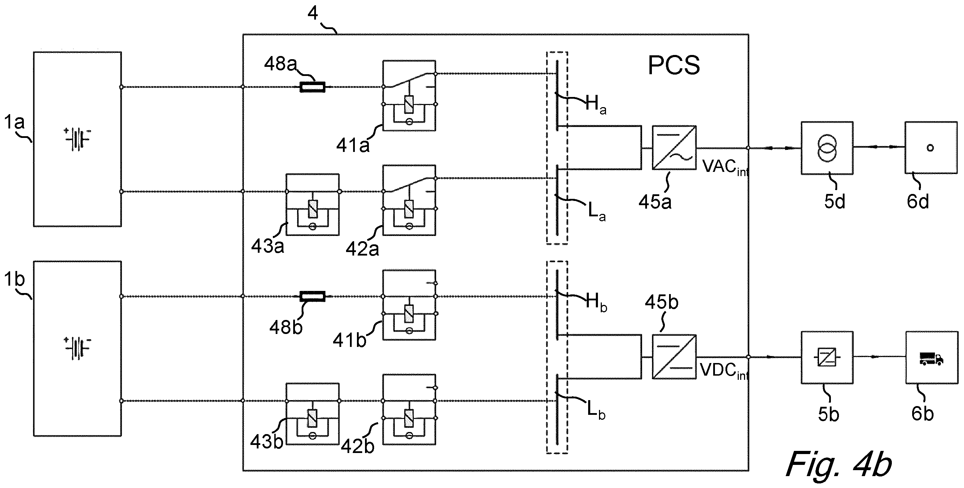

In fig. 4b the EMS has manipulated the SPDT switches 41a, 42a, 41b, 42b to connect the first battery section 1a to the main AC-DC converter 45a and the second battery section 1b to the main DC-DC converter 45b. In this way both the AC terminal(s) 6d and the DC terminal(s) 6b can be serviced in parallel with full isolation between the two battery sections 1a, 1b. Similarly, supercapacitor sections can also be connected to the main AC-DC converter 45a, and the main DC-DC converter 45b with full isolation therebetween.

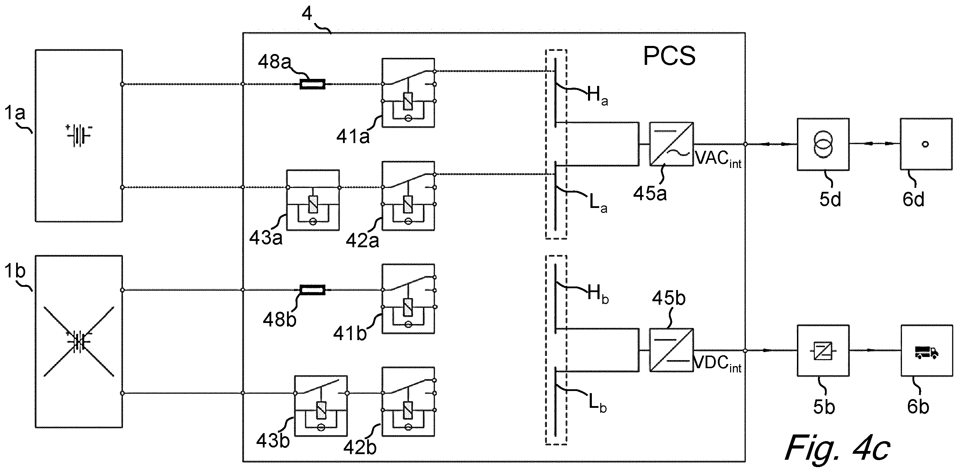

In fig. 4c the first battery section 1a is connected to the main DC-AC converter 45a via the SPDT switches 41a, 42a and the second battery section 1b is completely disconnected by the EMS having opened the SPST switch 43b. For example, the second battery section 1b is faulty and cannot be used or there is no need for the second battery section 1b currently.

Additionally, as mentioned above, it is possible that some battery and/or supercapacitor sections will exhibit lower than designed voltages since one or more modules in the section has been disconnected. Over time, more and more battery modules and/or supercapacitor modules will malfunction and be disconnected gradually lowering the output voltage of the sections.

To this end, the main DC-AC converter 45a or main DC-DC converter 45b may have different tolerable ranges for the DC voltage interfacing with the battery/supercapacitor sections. For example, the main DC-AC converter 45a tolerates only small deviations from the design voltage of each section (e.g. about 768 V) whereas the main DC-DC converter 45b tolerates larger deviations from the design voltage for the DC voltage at the interface with the batteries and/or supercapacitor modules. Thereby, the EMS may be configured to only connect sections still operating close to the design voltage to the main DC-AC converter 45a while the EMS can select one or more faulty sections (exhibiting a lower voltage) to the DC-DC converter 45b if needed. Of course this is only an example and in some implementations the DC voltage tolerances are reversed for the main DC-AC converter 45a and main DC-DC converter 45b.

In some implementations, a section with a faulty module may be suitable for connection to one or more terminals, but not other terminals. For example, a faulty section may be suitable for connection to the EVC terminal but no other terminals whereby the faulty section is connected to the EVC terminal for charging an electric vehicle.

It is understood that the arrangement of two SPDT switches 41a, 42a, 41b, 42b (or a single DPDT switch) can be used for each battery and supercapacitor section enabling the EMS to individual allocate individual sections to one of the main DC-AC converter 45a and main DC-DC converter 45b based on e.g. power demand.

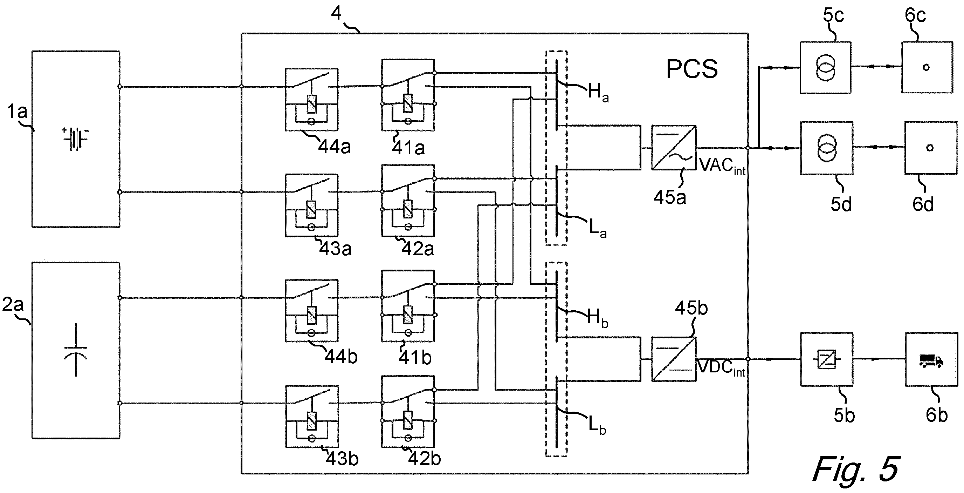

Fig. 5 depicts an alternative embodiment showing a battery section 1a and supercapacitor section 2 being connected to the PCS 4. A difference between the PCS 4 shown in fig. 4 and the PCS 4 of figs. 3a-c is that the fuse has been replaced with a fourth SPTD switch 44a, 44b for each section 1a, 2a. The fourth SPDT switch is operated in parallel with the corresponding third SPDT switch 43a, 43b for each section 1a, 2a to allow full isolation of a disconnected battery section 1a or supercapacitor section 2a when needed.

Fig. 4 also depicts that the main DC-AC converter 45a may be arranged to convey power to/from two or more AC terminals 6c, 6d. The main DC-AC converter 45a transforms the DC voltage of the battery and supercapacitor sections (being e.g. 768 V DC) to an intermediate AC voltage VACᵢₙₜ which in turn is stepped up or down by the transformers 5c, 5d associated with each one of the AC terminals 6c, 6d. A similar arrangement may also be used after the main DC-DC converter 45b with two or more DC ports 6b being connected to the main DC-DC converter 45b using a respective DC-DC converter stepping down/up the intermediate DC voltage VDCᵢₙₜ to an appropriate DC voltage level at the respective DC terminal 5b. Accordingly, while a simple switch arrangement using two SPDT switches (or one DPDT switch) for each section can be used the modularity of the HESS is extensive, allowing e.g. all supercapacitor sections to be allocated to one main converter 45a, 45b and all battery sections to the other main converter 45a, 45b or vice versa.

In some implementations, the main DC-AC converter 45a and/or main DC-DC converter 45b is associated with only one terminal. In such cases the AC voltage transformation or DC-DC conversion implemented by the transformer 5c, 5d or DC-DC converter 5b can be integrated into the respective main DC-AC converter 45a and/or main DC-DC converter 45b.

In some implementations, the main DC-AC converter 45a and main DC-DC converter 45b may be replaced with two main DC-AC converters or two main DC-DC converters. For example, the main DC-AC converter 45a may be configured to output 400 VAC directly to communicate with a household terminal and the main DC-DC converter in fig. 4 is replaced with a second main DC-AC converter configured to output at least 0.4 kV, such as at least 1 kV, at least 110 kV or at least 132 kV AC directly to a grid terminal.

Turning back to fig. 1, in some implementations, the HESS 10 placed in its entirety inside a housing. It has been realized that with sodium ion battery modules and supercapacitor modules a HESS 10 with a maximum output power about 1.6 MW can be fitted inside an ISO container, such as an ISO shipping container. Hereby, it is understood that an ISO container can be used as the housing which e.g. enables convenient transportation of the HESS 10.

Additionally, the HESS 10 uses sodium ion batteries and supercapacitors which can be rendered completely inert, without damaging the modules, by short-circuiting. To this end, the EMS 3 may be configured to control a plurality of short-circuit switches associated with each battery cell and/or supercapacitor cell wherein each short circuit switch is configured to short-circuit the cathode and anode of each cell. For example, this is performed prior to transportation, thereby rendering the HESS 10 completely safe and inert. By comparison, a HESS utilizing lead-acid or lithium-ion batteries cannot be rendered completely inert without damaging the modules making them much more dangerous, and less convenient, to transport.

Hereby, it is envisaged that the HESS 10 of the present invention is placed on a trailer and used as an ambulatory system that is moved to locations where it is needed. For example, the HESS 10 can be used at a first location and connected to the grid to perform frequency balancing via the grid AC terminal. Later, the HESS 10 is disconnected, rendered inert by utilization of the safety switches and moved to a second, off-grid location, where it is connected to photovoltaic cells to the photovoltaic terminal 6a and a household via the household terminal 6c to stabilize power availability at the off-grid location. Since the sodium ion battery modules and supercapacitors are comparatively temperature independent, the HESS 10 can be used in most environments.

Alternatively, the HESS 10 is deployed for long time use at a single location. For example, according to particularly advantageous implementations the HESS 10 is connected the grid via the AC grid terminal 6d and one or more households via the household AC terminal 6c. The EMS 3 will dynamically allocate battery modules and supercapacitor modules between the terminals based on demand, time of day, time of year, grid frequency etc. to stabilize the grid and at the same time supply power to the one or more households. Preferably, at times of high power availability in the grid the HESS 10 stabilizes the grid frequency by charging the battery and supercapacitor modules whereby the stored power can be used to stabilize the grid frequency at times of lower power availability and/or supply power to the one or more households.

Preferably, the HESS 10 when it is deployed for long time use, is submerged below ground. For energy storage systems using lithium ion batteries there are safety concerns stopping underground energy storage facilities. However, with the present invention safety is enhanced since the modules, if needed, can be rendered completely inert by short circuiting. Additionally, below ground the soil temperature is comparatively stable and equal to the yearly average surface temperature. Thus, the HESS 10 may not necessitate any active HVAC system since the below ground temperature, at many longitudes, is within the operational temperature range of the subsystems 1, 2.

According to some implementations, the HESS 10 further comprises a heat storage system comprising a heater and a heat engine. During e.g. peak power production hours it is advantageous to consume power to stabilize the grid frequency. To this end, and especially when the HESS 10 is submerged below ground, power can be conveyed to the heater which heats the environment of the HESS 10. It is envisaged that many types of heaters can be used, and many heaters operate at high power levels, allowing the HESS 10 to consume power even when the storage subsystems 1, 2 are full.

During times of lower power availability on the grid or a high demand at e.g. the household terminal 6c the heater is shut down and the heat engine, configured to thermally communicate with the environment which has been heated by the heater, is activated. The heat engine, as such known in the art, utilizes a temperature differential to produce power which can be used to charge the storage subsystems 1, 2 or supply power directly to one of the terminals.

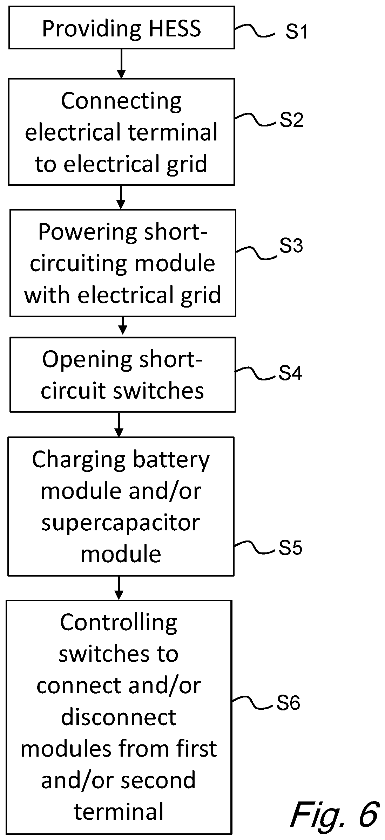

Fig. 6 is a flowchart illustrating a method for starting a HESS with short-circuit safety switches provided for each battery cell and/or each supercapacitor cell. The HESS comprises a short-circuiting module implemented as a part of the EMS, BMS or CMS wherein the short-circuiting module is configured to control each short circuiting switch. The HESS is provided at step S1. For example, the HESS is delivered on a trailer placed above ground, submerged below ground or submerged below water. When the HESS is transported and first provided each short-circuiting switch is in a closed state so as to short circuit each supercapacitor cell and/or each battery cell constituting each supercapacitor module and each battery module. This renders the HESS as a whole completely inert, but also completely without self-powering capabilities. At step S2 the HESS is connected to an external entity such as the utility grid, a household grid or a photovoltaic system.

The method then goes to step S3 comprising powering the short-circuiting module with power from the external entity whereby the short-circuiting module at step S4 controls the short-circuiting switches to open, releasing each battery cell and/or supercapacitor cell from the short-circuited safe state. Preferably, it is only the short-circuiting module which is powered when the short circuit switches are opened. Any voltage converters (or other functionality of the EMS) may at this point in time be deactivated and unpowered. After the short circuiting switches have been opened, the method goes to step S5 involving initiating charging of the battery modules and/or supercapacitor modules by drawing power from the external entity. At this stage the HESS starts to become fully operational and, in some implementations where the HESS comprises at least two terminals the method may then go to step S6 comprising controlling the plurality of switches (se figs. 3, 4a-c, 5) to connect/disconnect battery sections and/or supercapacitor modules based on the supply/demand metric.

In some implementations, the HESS short-circuiting module is further configured to initiate a full shut down procedure (e.g. if a severe malfunctioning has occurred or if the HESS is to be moved to a new location). In doing so, the short-circuiting module closes each short-circuit switch again whereby the HESS again enters an inert safe state.

The person skilled in the art realizes that the present invention by no means is limited to the preferred embodiments described above. On the contrary, many modifications and variations are possible within the scope of the appended claims. For example, various intermediate DC and AC voltages may be used and the number of battery modules and supercapacitor modules can vary depending on the desired storage and power capacity of the HESS.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A hybrid energy storage system, HESS, (10) comprising:
a first energy storage subsystem (1) comprising a plurality of sodium ion battery modules (11-11 :N);
a second energy storage subsystem (2) comprising a plurality of supercapacitor modules,
an energy management system, EMS, (3), and
a first electrical terminal (6c) configured to connect the HESS (10) to a first external grid,
wherein the EMS (3) is configured to charge/ discharge the first energy storage subsystem (1) and the second energy storage subsystem (2) with electrical energy via the first external grid based on a supply/demand metric obtained by the EMS, wherein the supply demand metric is associated with the first external grid.

2. The HESS (10) according to claim 1, wherein the cathodes and/or anodes of each sodium ion battery module (11) comprises Prussian blue or sodium vanadium.

3. The HESS (10) according to any of the preceding claims, wherein the supercapacitor modules comprise battery-supercapacitor hybrids.

4. The HESS (10) according to claim 3, wherein the battery-supercapacitor hybrids comprise anodes and cathodes, wherein the anode and cathode comprises graphene anodes and with metal oxide.

5. The HESS (10) according to any of the preceding claims, wherein the first energy storage subsystem (1) and the second energy storage subsystem (2) have a maximum total power output exceeding 1,6 MW.

6. The HESS (10) according to any of the preceding claims, wherein the HESS (10) is provided inside a single housing having the dimensions of an ISO shipping container.

7. The HESS (10) according to any of the preceding claims, further comprising:
a second electrical terminal (6a, 6b, 6d) configured to connect the HESS (10) to a second electric grid, and
a plurality of switches (41a, 42a, 41b, 42b),
wherein the EMS (3) is further configured to control the plurality of switches (41a, 42a, 41b, 42b) to connect one or more sodium ion battery modules (11) to either one of the first and second terminal (6a, 6b, 6c, 6d) and to control the plurality of switches (41a, 42a, 41b, 42b) to connect one or more supercapacitor modules to either one of the first and second terminal (6a, 6b, 6c, 6d), so as to adaptively allocate at least a portion of the first energy storage subsystem (1) and at least a portion of the second energy storage subsystem (2) between the first and second terminal (6a, 6b, 6c, 6d).

8. The HESS (10) according to any of the preceding claims, further comprising a first DC-AC converter (45a) connected between the first and second energy storage subsystem, and the first external terminal (6c), the first DC-AC converter (45a) converting DC of the first energy storage subsystem (1) and the second energy storage subsystem (2) to AC at the first terminal (6a), wherein the first terminal (6c) is an AC terminal.

9. The HESS (10) according to claim 8 when depending on claim 7, further comprising a second DC-AC converter, connected between the first and second energy storage subsystem, and the second external terminal (6d), the second DC-AC converter converting DC of the first energy storage subsystem (1) and the second energy storage subsystem (2) to AC at the second terminal (6d), wherein the second terminal (6d) is an AC terminal.

10. The HESS (10) according to claim 9, wherein the AC voltage of the first terminal (6c) is 0.4 kV to 275 kV, such as 1 kV to 132 kV, and the AC voltage of the second terminal (6d) is 400 V.

11. The HESS (10) according to claim 8 when depending on claim 7, further comprising a DC-DC converter (45b) converting DC of a first voltage of the first energy storage subsystem (1) and the second energy storage subsystem (2) to DC of a second voltage at the second terminal (6b), wherein the second terminal (6b) is a DC terminal.

12. The HESS (10) according to any of the preceding claims, further comprising a thermal energy storage subsystem comprising a heat engine and a heater configured to heat an environment of the HESS (10).

13. The HESS (10) according to any of the preceding claims wherein the supply/demand metric is at least one of an electricity cost value, a grid AC frequency, a measured current, a measured power level, and a measured voltage of the first external grid.

14. The HESS (10) according to any of the preceding claims,
wherein each sodium ion battery module (11) and supercapacitor module is arranged in a sodium ion battery section, comprising multiple sodium ion battery modules (11) connected in series, and a supercapacitor section, comprising multiple supercapacitor modules connected in series, respectively,
wherein each sodium ion battery module (11) and each supercapacitor module is further associated with an individual disconnect switch (13), and
wherein the EMS (3) is further configured to identify a faulty sodium ion battery module (11) or a faulty supercapacitor module and, in response to detecting a faulty sodium ion battery module (11) or a faulty supercapacitor module disconnecting the faulty sodium ion battery module or faulty supercapacitor module.

15. A method for activating a HESS (10), the method comprising:
providing (S1) a HESS (10) according any of the preceding claims, wherein each sodium-ion battery module (11) comprises at least one sodium-ion battery cell (12) and wherein each sodium-ion battery cell (12) is associated with a short-circuit switch which is closed, so as to short circuit each sodium-ion battery cell (12);
connecting (S2) the first electrical terminal (6c) to the first electrical grid;
powering (S3) a short-circuiting module using the first electrical grid, the short-circuiting module being configured to actuate the short-circuit switches so as to open or close the short-circuit switches;
opening (S4) each short-circuit switch with the short-circuiting module; and
after each short-circuit switch has been opened, charging (S5) at least one sodium-ion battery module (11) with power from the first electrical grid.
